# EUROPÄISCHE PATENTSCHRIFT

(11) **EP 4 078 234 B1**
(45) Veröffentlichungstag und Bekanntmachung des Hinweises auf die Patenterteilung: **16.10.2024**
(21) Anmeldenummer: 20796737.3
(22) Anmeldetag: 19.10.2020
(51) Int. Cl.: G01S 15/931, B60R 19/48

(54) **SENSORANORDNUNG AN EINEM FAHRZEUG**
SENSOR ARRANGEMENT ON A VEHICLE
AGENCEMENT DÉTECTEUR SUR UN VÉHICULE

(30) Priorität: 18.12.2019 DE 102019134861
(43) Veröffentlichungstag der Anmeldung: 26.10.2022
(73) Patentinhaber: Audi AG, 85045 Ingolstadt (DE)
(72) Erfinder: KAISER, Max, 74238 Krautheim (DE)
(86) Internationale Anmeldenummer: PCT/EP2020/079363
(87) Internationale Veröffentlichungsnummer: WO 2021/121729

(56) Entgegenhaltungen:
- DE-A1- 102015 119 269
- DE-A1- 102017 009 057
- FR-A1- 3 065 433

## Beschreibung

Die Erfindung betrifft eine Sensoranordnung an einem Fahrzeug gemäß der Gattung des Patentanspruchs 1.

Sensoranordnungen an Fahrzeugen sind in zahlreichen Variationen bekannt. Hierbei werden im Fahrzeug verbaute Sensoren für Assistenzprogramme verwendet, wie beispielsweise einem Notbremsassistent. Die korrespondierenden Sensoranordnungen haben die Aufgabe einen Sensor im Kollisionslastfall im Niedriggeschwindigkeitsbereich vor einer Beschädigung zu schützen, so dass der Sensor nach einem solchen Aufprall funktionsfähig bleibt. Hierbei können die Sensoren beispielsweise in einer geschützten Position hinter einem Außenbauteil angeordnet werden. Alternativ können die Sensoranordnungen Verbindungsanordnungen umfassen, welche eine Haltevorrichtung beweglich zwischen einer Betriebsstellung und mindestens einer Schutzstellung mit mindestens einem Fahrzeugbauteil verbindet. Die Haltevorrichtung nimmt den Sensor auf. Eine von einem Kollisionsgegner verursachte Kollisionskraft umfasst einen in eine erste Raumrichtung wirkenden ersten Kraftanteil, welcher die Haltevorrichtung anteilig in Richtung der korrespondierenden ersten Raumrichtung in die mindestens eine Schutzstellung bewegt. Eine Rückstellkraft von mindestens einer Rückstellanordnung überführt die Haltevorrichtung aus der mindestens einen Schutzstellung in die Betriebsstellung. Die erste Raumrichtung entspricht hierbei einer Fahrzeuglängsrichtung.

Aus der DE 10 2017 009 057 A1 ist eine Sensoranordnung bekannt, wobei ein Sensor mit einer sensoraktiven Oberfläche an einem oder hinter einem Außenanbauteil eines Fahrzeugs angeordnet ist. Die Sensoranordnung umfasst eine Sensorführung, mit welcher der Sensor mit einem ersten Strukturelement des Fahrzeugs schwenkbeweglich in Fahrzeuglängsrichtung verbunden ist. Zudem umfasst die Anordnung ein Abstandsmittel, mit welchem die Bewegung des Sensors in Fahrzeuglängsrichtung auf einen der Gebrauchsstellung des Sensors entsprechenden maximalen Abstand zu einem gegenüber dem ersten Strukturelement in Richtung des Fahrzeuginnenraums versetzten zweiten Strukturelement des Fahrzeugs beschränkt ist. Zudem umfasst die Sensoranordnung ein Rückstellelement, welches ausgebildet ist, den Sensor in rückwärtige Richtung zu verschieben. Der Sensor wird aufgrund einer durch eine Kollision in einem Niedriggeschwindigkeitsbereich erzeugten äußeren Krafteinwirkung in Fahrzeuglängsrichtung bewegt.

Aus der DE 10 2017 009 055 A1 ist eine Anordnung eines eine sensoraktive Fläche aufweisenden Sensors an einem oder hinter einem Außenanbauteil eines Fahrzeugs bekannt, welches eine Sensorführung mit einem Zugmittel aus einer Formgedächtnislegierung und ein Rückstellmittel umfasst. Der Sensor ist mittels des Zugmittels bei einem bevorstehenden sensierten Kollisionslastfall im Niedriggeschwindigkeitsbereich und/oder bei einem sensierten Kollisionslastfall im Niedriggeschwindigkeitsbereich aus einer Aktivposition in eine Schutzposition in Richtung des Fahrzeuginnenraums verschiebbar. Der Sensor ist mittels des Rückstellmittels aus der Schutzposition zurück in die Aktivposition verschiebbar.

Aus der FR 3 065 433 A1 ist eine gattungsgemäße Sensoranordnung an einem Fahrzeug, mit einer Verbindungsanordnung bekannt, welche eine Haltevorrichtung beweglich zwischen einer Betriebsstellung und mindestens einer Schutzstellung mit mindestens einem Fahrzeugbauteil verbindet. Die Haltevorrichtung nimmt einen Sensor auf, wobei eine von einem Kollisionsgegner verursachte Kollisionskraft einen in eine erste Raumrichtung wirkenden ersten Kraftanteil umfasst, welcher die Haltevorrichtung anteilig in Richtung der korrespondierenden ersten Raumrichtung in die mindestens eine Schutzstellung bewegt. Die erste Raumrichtung entspricht einer Fahrzeuglängsrichtung. Die Verbindungsanordnung weist mindestens eine Hebelanordnung auf, welche zusätzlich mindestens einen in eine weitere Raumrichtung wirkenden Kraftanteil der Kollisionskraft in eine anteilige Bewegung der Haltevorrichtung in die korrespondierende Raumrichtung übersetzt. Hierbei überführt die mindestens eine Hebelanordnung die Haltevorrichtung in eine resultierende Wirkungsrichtung der Kollisionskraft in die mindestens eine Schutzstellung.

Der Erfindung liegt die Aufgabe zu Grunde, eine Sensoranordnung an einem Fahrzeug bereitzustellen, welche den Schutz eines korrespondierenden Sensors bei einem Kollisionslastfall im Niedriggeschwindigkeitsbereich verbessert.

Diese Aufgabe wird durch eine Sensoranordnung an einem Fahrzeug mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Um eine Sensoranordnung an einem Fahrzeug bereitzustellen, welche den Schutz eines korrespondierenden Sensors in einem Kollisionslastfall im Niedriggeschwindigkeitsbereich verbessert, weist die Verbindungsanordnung mindestens eine Hebelanordnung auf, welche zusätzlich zu einem in Fahrzeuglängsrichtung wirkenden Kraftanteil einer wirkenden Kollisionskraft, mindestens einen in eine weitere Raumrichtung wirkenden Kraftanteil der Kollisionskraft in eine anteilige Bewegung einer Haltevorrichtung in die korrespondierende Raumrichtung übersetzt, wobei die mindestens eine Hebelanordnung die Haltevorrichtung in eine resultierende Wirkungsrichtung der Kollisionskraft in mindestens eine Schutzstellung überführt. Die Hebelanordnungen weisen jeweils mindestens einen Schwenkarm und mindestens einen Haltearm auf, wobei der mindestens eine Schwenkarm mit einem ersten Endbereich mit dem korrespondierenden Endbereich der Haltevorrichtung und mit einem zweiten Endbereich mit der korrespondierenden Rückstellanordnung gekoppelt ist. Der mindestens eine Haltearm ist mit einem ersten Endbereich schwenkbar mit dem mindestens einen Fahrzeugbauteil und mit einem zweiten Endbereich schwenkbar mit einem Haltebereich des korrespondierenden Schwenkarms verbunden, wobei der Haltebereich zwischen dem ersten Endbereich des Schwenkarms und dem zweiten Endbereich des Schwenkarms angeordnet ist. Hierbei kann der mindestens eine Schwenkarm um den Haltebereich gegen die Rückstellkraft der korrespondierenden Rückstellanordnung geschwenkt werden. Dadurch kann eine Bewegung der Haltevorrichtung ermöglicht werden, wobei eine Relativbewegung zwischen dem mindestens einen Schwenkarm und dem mindestens einen korrespondierenden Haltearm zumindest erschwert oder verhindert werden kann. Zudem kann die Bewegung ohne Verzug des mindestens einen Haltearms und des mindestens einen Schwenkarms erfolgen. Hierbei kann ein Verhaken oder ein Verklemmen oder ein Verkanten des mindestens einen Schwenkarms oder des mindestens einen Haltearms der korrespondierenden Hebelanordnung zumindest erschwert oder verhindert werden.

Unter einem Kollisionslastfall im Niedriggeschwindigkeitsbereich wird im Folgenden ein Aufprall von mindestens zwei Kollisionsgegnern mit Geschwindigkeiten verstanden, welche kleiner als ein vorgegebener Schwellwert sind. Der Schwellwert liegt beispielsweise einem Geschwindigkeitsbereich von 3 bis 10 km/h vorzugsweise bei einer Geschwindigkeit von ca. 5 km/h.

Unter einer Sensoranordnung wird im Folgenden eine Baugruppe mit einer Verbindungsanordnung und einer Haltevorrichtung verstanden. Die Haltevorrichtung nimmt den Sensor auf. Die Verbindungsanordnung verbindet die Haltevorrichtung beweglich zwischen einer Betriebsstellung und mindestens einer Schutzstellung mit mindestens einem Fahrzeugbauteil. Eine von einem Kollisionsgegner übertragene Kollisionskraft umfasst mehrere in eine korrespondierende Raumrichtung wirkende Kraftanteile, wobei mindestens ein Kraftanteil die Haltevorrichtung anteilig in Richtung der korrespondierenden Raumrichtung in die mindestens eine Schutzstellung bewegt. Eine Rückstellkraft von mindestens einer Rückstellanordnung überführt die Haltevorrichtung aus der mindestens einen Schutzstellung in die Betriebsstellung. Hierbei wird die Haltevorrichtung durch die mindestens eine Hebelanordnung in die resultierende Wirkungsrichtung der Kollisionskraft in mindestens eine Schutzstellung überführt.

Die Sensoranordnung ist mit einem Fahrzeugbauteil einer Fahrzeugfront oder einem Fahrzeugheck verbunden.

Unter einem Sensor wird im Folgenden ein Bauteil mit einer sensoraktiven Oberfläche verstanden.

In vorteilhafter Weise kann die Haltevorrichtung mit dem Sensor in mehr als einer Raumrichtung bewegt werden, wodurch die Haltevorrichtung flexibler von einem Kollisionsgegner wegbewegt oder mit dem Kollisionsgegner mitbewegt werden kann. Zudem kann die Haltevorrichtung auch auf Kollisionskräfte reagieren, welche nicht in Fahrzuglängsrichtung auf die Haltevorrichtung übertragen werden oder welche nicht direkt auf die Haltevorrichtung oder auf einen Sensorbereich der Haltevorrichtung treffen. Dadurch kann die Haltevorrichtung in vorteilhafter Weise auch bei seitlich versetzten Aufprallsituationen oder bei Eckaufprallsituationen von dem Kollisionsgegner wegbewegt werden, um den Sensor zu schützen. Hierbei kann die Haltevorrichtung soweit aus der Betriebsstellung bewegt werden, bis die aus der Kollisionskraft resultierende Kollisionsenergie in Bewegungsenergie der Haltevorrichtung und/oder in Reibungsenergie der mindestens einen Hebelanordnung umgewandelt ist. Die aus dieser Bewegung resultierende Stellung der Halteanordnung entspricht der Schutzstellung. Hierbei können viele verschiedene Schutzstellungen in Abhängigkeit eines Auftreffwinkels des Kollisionsgegners und in Abhängigkeit der wirkenden Kollisionskraft umgesetzt werden, wobei sich die mindestens eine Hebelanordnung an die wirkende Kollisionskraft anpassen kann.

In vorteilhafter Ausgestaltung der erfindungsgemäßen Sensoranordnung kann eine zweite Raumrichtung einer Fahrzeugquerrichtung und eine dritte Raumrichtung kann einer Fahrzeughochrichtung entsprechen, wobei die mindestens eine Hebelanordnung einen in Fahrzeugquerrichtung wirkenden Kraftanteil der Kollisionskraft in eine anteilige Bewegung der Haltevorrichtung in Fahrzeugquerrichtung übersetzt und/oder einen in Fahrzeughochrichtung wirkenden Kraftanteil der Kollisionskraft in eine anteilige Bewegung der Haltevorrichtung in Fahrzeughochrichtung übersetzt. Hierbei kann die Haltevorrichtung in einer Ebene bewegt werden, welche von der Fahrzeuglängsrichtung und der Fahrzeugquerrichtung aufgespannt wird. Zusätzlich oder alternativ kann die Haltevorrichtung in einer Ebene bewegt werden, welche von der Fahrzeuglängsrichtung und der Fahrzeughochrichtung aufgespannt wird. Alternativ kann die Haltevorrichtung in einem Raum bewegt werden, welcher von der Fahrzeuglängsrichtung, der Fahrzeugquerrichtung und der Fahrzeughochrichtung aufgespannt wird. Dadurch können viele Ausweichmöglichkeiten für die Haltevorrichtung geschaffen werden.

In weiterer vorteilhafter Ausgestaltung der erfindungsgemäßen Sensoranordnung kann eine erste Hebelanordnung mit einem ersten Endbereich der Haltevorrichtung und mit einer ersten Rückstellanordnung gekoppelt werden, und eine zweite Hebelanordnung kann mit einem zweiten Endbereich der Haltevorrichtung und mit einer zweiten Rückstellanordnung gekoppelt werden. Hierbei kann eine symmetrische Anordnung entstehen, welche auf verschiedene Kollisionsfälle flexibel reagieren kann. Zudem können die Hebelanordnungen aufgrund der wirkenden Kollisionskraft gegen die Rückstellkraft der korrespondierenden Rückstellanordnung bewegt werden, wodurch Kollisionsenergie zusätzlich in potentielle Energie umgewandelt werden kann, und die Haltevorrichtung dadurch eine kürzere Strecke zurücklegen kann. Dadurch kann ein Zusammenstoß der Halteanordnung mit einem in Fahrzeuglängsrichtung hinter der Halteanordnung angeordneten Bauteil vermieden oder zumindest erschwert werden.

In weiterer vorteilhafter Ausgestaltung der erfindungsgemäßen Sensoranordnung kann der mindestens eine Schwenkarm am Haltebereich eine erste Führungsgeometrie aufweisen, welche mit einer am zweiten Endbereich des Haltearms angeordneten zweiten Führungsgeometrie zentrierend zusammenwirken kann. Zusätzlich oder alternativ kann der mindestens eine Haltearm am ersten Endbereich eine dritte Führungsgeometrie aufweisen, welche mit einer an dem mindestens einen Fahrzeugbauteil angeordneten vierten Führungsgeometrie zentrierend zusammenwirken kann. Hierbei kann der jeweilige Haltearm über einen korrespondierenden Befestigungsadapter mit dem mindestens einen Fahrzeugbauteil verbunden werden. Daher kann die vierte Führungsgeometrie auch an dem Befestigungsadapter ausgebildet sein. Durch die zusammenwirkenden Führungsgeometrien kann der korrespondierende Schwenkarm bzw. der korrespondierende Haltearm, insbesondere bei einer Rückstellbewegung, besser bzw. zuverlässiger in die Betriebsstellung überführt werden. Zur Umsetzung kann eine der beiden jeweils zusammenwirkenden Führungsgeometrien beispielsweise jeweils als Negativform und eine der beiden jeweils zusammenwirkenden Führungsgeometrien kann jeweils als Positivform ausgeführt sein. Um eine besonders gute zentrierende Führungswirkung zu erzielen, können die zusammenwirkenden Führungsgeometrien vorzugsweise jeweils einen trapezförmigen Querschnitt aufweisen. Selbstverständlich können auch andere geeignete Führungsgeometrien verwendet werden, welche einen anderen Querschnitt, wie beispielsweise einen halbrunden, dreieckigen oder elliptischen Querschnitt aufweisen.

In weiterer vorteilhafter Ausgestaltung der erfindungsgemäßen Sensoranordnung können die Rückstellanordnungen jeweils mit dem mindestens einen Fahrzeugbauteil gekoppelt werden. Das Fahrzeugbauteil kann beispielsweise einem Strukturbauteil, wie beispielsweise einem Querträger oder einem Montageträger entsprechen, welches die korrespondierende Rückstellanordnung sicher und zuverlässig halten kann, ohne bei der Wirkung der Kollisionskraft selbst zu verformen. Der Montageträger wird vorzugsweise aus Kunststoffbauteil ausgeführt und an vorderen Anschraubpunkten mit der Fahrzeugkarosserie verschraubt.

In weiterer vorteilhafter Ausgestaltung der erfindungsgemäßen Sensoranordnung können die Rückstellanordnungen jeweils mindestens ein Federelement aufweisen. Das mindestens eine Federelement kann beispielsweise als Schraubenfeder ausgeführt werden. Durch das mindestens eine Federelement kann einfach eine Rückstellkraft generiert werden. Zudem können Abmessungen und Eigenschaften der Federelemente an einen vorhandenen Bauraum angepasst werden.

In einer alternativen Ausgestaltung der erfindungsgemäßen Sensoranordnung können die Rückstellanordnungen jeweils mindestens einen Antrieb und mindestens ein Zugelement aufweisen, welches mit dem mindestens einen Schwenkarm gekoppelt ist. Hierbei erzeugt der mindestens eine Antrieb die Rückstellkraft und überträgt diese auf das mindestens eine Zugelement überträgt. Zudem können die Rückstellanordnungen zusätzlich jeweils einen Überlastungsschutz mit einer Trennanordnung umfassen, welche den mindestens einen Schwenkarm von dem mindestens einen Zugelement trennt. Das Zugelement und der Schwenkarm können bei geringer werdender Kollisionskraft durch eine geeignete Anordnung wieder miteinander verbunden werden. Das Zugelement kann einer beweglich in einer Aufnahme gelagerten Zugstange oder einem Zugseil oder einem Teleskopauszug entsprechen. Durch den Antrieb kann die Rückstellkraft an die aktuell wirkende Kollisionskraft angepasst werden. Zudem kann die Halteanordnung nach der Kollision durch den Antrieb einfach in die Betriebsposition überführt werden. Zudem kann durch den Antrieb eine Position der Halteanordnung und dadurch die Position des Sensors in der Betriebsstellung feiner eingestellt werden. Dadurch kann der Sensor eine Position aufweisen, welche zur Ermittlung von Sensordaten bevorzugt wird.

In weiterer vorteilhafter Ausgestaltung der erfindungsgemäßen Sensoranordnung kann die Haltevorrichtung einen steuerbaren Kühllufteinlass aufnehmen. Dadurch kann zusätzlich zum Sensor auch der Kühllufteinlass in einem Kollisionslastfall im Niedriggeschwindigkeitsbereich durch die beweglich gelagerte Haltevorrichtung geschützt werden. Der Kühllufteinlass kann einen offenen und einen geschlossenen Zustand aufweisen. Da der Kühllufteinlass im Kollisionslastfall im Niedriggeschwindigkeitsbereich in die mindestens eine Schutzposition bewegt werden kann, kann der Kühllufteinlass in Fahrzeuglängsrichtung weiter vorne angeordnet werden. Somit kann im geschlossenen Zustand ein Staudruck reduziert werden und dadurch ein Luftleitwert des Fahrzeugs verbessert werden.

In weiterer vorteilhafter Ausgestaltung der erfindungsgemäßen Sensoranordnung kann die Haltevorrichtung einen Rahmen umfassen, welcher den Sensor zumindest teilweise umschließt. Der Rahmen kann einen direkten Kontakt zwischen dem Kollisionsgegner und dem Sensor erschweren. Zudem kann der Rahmen eine Krafteinwirkung vom Sensor wegleiten.

In weiterer vorteilhafter Ausgestaltung der erfindungsgemäßen Sensoranordnung kann die Haltevorrichtung mindestens eine Verstärkungsrippe umfassen. Die Verstärkungsrippe kann die in die Haltevorrichtung eingeleitete Kollisionskraft oder Kollisionsenergie an die mindestens eine Hebelanordnung oder die mindestens eine Rückstellanordnung ableiten, wodurch eine Wahrscheinlichkeit für eine Beschädigung der Haltevorrichtung oder des Sensors oder des Kühllufteinlasses weiter reduziert werden kann.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Ein Ausführungsbeispiel der Erfindung ist in der Zeichnung dargestellt und wird in der nachfolgenden Beschreibung näher erläutert. In der Zeichnung bezeichnen gleiche Bezugszeichen Komponenten bzw. Elemente, die gleiche bzw. analoge Funktionen ausführen. Hierbei zeigen:
- Fig. 1: eine schematische Vorderansicht eines Ausschnitts einer Fahrzeugfront mit einem Ausführungsbeispiel einer erfindungsgemäßen Sensoranordnung in einer Betriebsstellung;
- Fig. 2: eine schematische Draufsicht auf die erfindungsgemäße Sensoranordnung aus Fig. 1 in der Betriebsstellung,
- Fig. 3: eine schematische Draufsicht auf die erfindungsgemäße Sensoranordnung aus Fig. 1 und 2 in einer ersten Schutzstellung,
- Fig. 4: eine schematische Draufsicht auf die erfindungsgemäße Sensoranordnung aus Fig. 1 und 2 in einer zweiten Schutzstellung, und
- Fig. 5: eine schematische perspektivische Seitenansicht in Fahrzeuglängsrichtung des Ausschnitts der Fahrzeugfront aus Fig. 1;
- Fig. 6: eine schematische perspektivische Darstellung eines Haltearms der erfindungsgemäßen Sensoranordnung aus Fig. 1 bis 5.
- Fig. 7: eine schematische perspektivische Darstellung eines Schwenkarms der erfindungsgemäßen Sensoranordnung aus Fig. 1 bis 5.

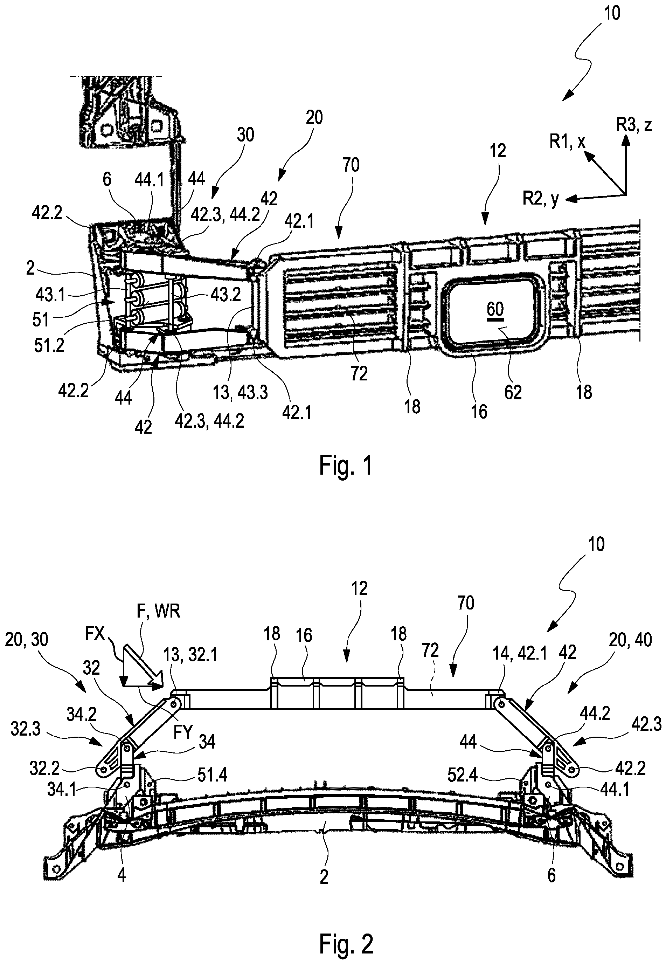

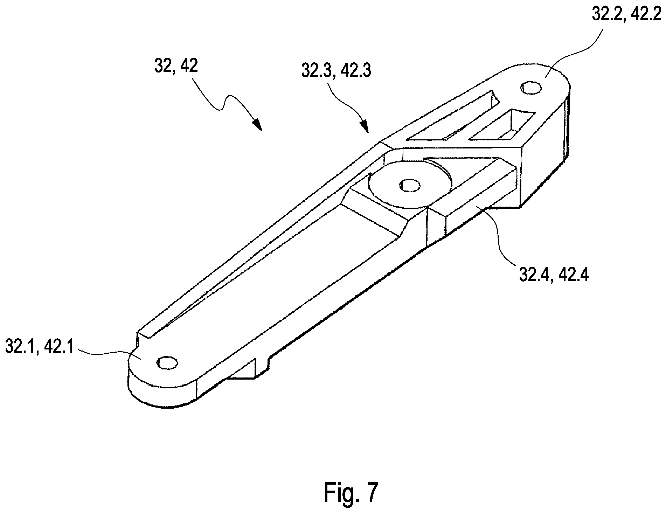

Wie aus Fig. 1 bis 7 ersichtlich ist, weist eine Sensoranordnung 10 an einem Fahrzeug eine Verbindungsanordnung 20 auf, welche eine Haltevorrichtung 12 beweglich zwischen einer Betriebsstellung und mindestens einer Schutzstellung mit mindestens einem Fahrzeugbauteil 2 verbindet. Die Haltevorrichtung 12 nimmt einen zu schützenden Sensor 60 auf. Eine von einem Kollisionsgegner verursachte Kollisionskraft F umfasst einen in eine erste Raumrichtung R1 wirkenden ersten Kraftanteil FX, welcher die Haltevorrichtung 12 anteilig in Richtung der korrespondierenden ersten Raumrichtung R1 in die mindestens eine Schutzstellung bewegt. Eine Rückstellkraft von mindestens einer Rückstellanordnung 51 überführt die Haltevorrichtung 12 aus der mindestens einen Schutzstellung zurück in die Betriebsstellung. Die erste Raumrichtung R1 entspricht im dargestellten Ausführungsbeispiel einer Fahrzeuglängsrichtung x.

Hierbei weist die Verbindungsanordnung 20 mindestens eine Hebelanordnung 30, 40 auf, welche zusätzlich mindestens einen in eine weitere Raumrichtung R2, R3, y, z wirkenden Kraftanteil FY der Kollisionskraft F in eine anteilige Bewegung der Haltevorrichtung 12 in die korrespondierende Raumrichtung R2, R3, y, z übersetzt, wobei die mindestens eine Hebelanordnung 30, 40 die Haltevorrichtung 12 in eine resultierende Wirkungsrichtung WR der Kollisionskraft F in die mindestens eine Schutzstellung überführt.

Wie aus Fig. 2 bis 4 weiter ersichtlich ist, umfasst die Verbindungsanordnung 20 im dargestellten Ausführungsbeispiel zwei Hebelanordnungen 30, 40, welche spiegelsymmetrisch zu einer Fahrzeuglängsachse angeordnet sind.

Wie aus Fig. 1 bis 5 weiter ersichtlich ist, entspricht eine zweite Raumrichtung R2 einer Fahrzeugquerrichtung y, und eine dritte Raumrichtung R3 entspricht einer Fahrzeughochrichtung z. Im dargestellten Ausführungsbeispiel der beiden Hebelanordnungen 30, 40 übersetzen die beiden Hebelanordnungen 30, 40 einen in Fahrzeugquerrichtung y wirkenden Kraftanteil FY der Kollisionskraft F in eine anteilige Bewegung der Haltevorrichtung 12 in Fahrzeugquerrichtung y. Hierbei kann sich die Haltevorrichtung 12 in einer Ebene bewegen, welche von der Fahrzeuglängsrichtung x und von der Fahrzeugquerrichtung y aufgespannt wird.

In einem alternativen nicht dargestellten Ausführungsbeispiel der beiden Hebelanordnungen 30, 40, übersetzen die Hebelanordnungen 30, 40 einen in Fahrzeughochrichtung z wirkenden Kraftanteil FZ der Kollisionskraft F in eine anteilige Bewegung der Haltevorrichtung 12 in Fahrzeughochrichtung z. Hierbei kann sich die Haltevorrichtung 12 in einer Ebene bewegen, welche von der Fahrzeuglängsrichtung x und von der Fahrzeughochrichtung z aufgespannt wird.

In einem weiteren alternativen nicht dargestellten Ausführungsbeispiel der Hebelanordnung 30, 40, übersetzen die Hebelanordnung 30, 40 einen in Fahrzeugquerrichtung y wirkenden Kraftanteil FY und einen in Fahrzeughochrichtung z wirkenden Kraftanteil FZ der Kollisionskraft F in eine anteilige Bewegung der Haltevorrichtung 12 in Fahrzeugquerrichtung y bzw. in Fahrzeughochrichtung z. Hierbei kann sich die Haltevorrichtung 12 in einem Raum bewegen, welcher von der Fahrzeuglängsrichtung x, von der Fahrzeugquerrichtung y und von der Fahrzeughochrichtung z aufgespannt wird.

Wie aus Fig. 1 bis 7 weiter ersichtlich ist, ist im dargestellten Ausführungsbeispiel der Verbindungsanordnung 20 eine erste Hebelanordnung 30 mit einem ersten Endbereich 13 der Haltevorrichtung 12 und mit einer in Fig. 1 sichtbaren ersten Rückstellanordnung 51 gekoppelt. Aus Gründen der Übersichtlichkeit sind die Rückstellanordnungen 51 in Fig. 2 bis 5 nicht dargestellt. Eine zweite Hebelanordnung 40 ist mit einem zweiten Endbereich 14 der Haltevorrichtung 12 und mit einer nicht dargestellten zweiten Rückstellanordnung gekoppelt. Die Haltevorrichtung 12 verläuft im dargestellten Ausführungsbeispiel in Fahrzeugquerrichtung y und überspannt nahezu die gesamte Breite der Fahrzeugfront. Hierbei ist die Haltevorrichtung 12 hinter einer nicht dargestellten Verkleidung beispielsweise einem Stoßfängerüberzug angeordnet. Die Verkleidung weist einen Ausschnitt auf, welcher fluchtend zu dem Sensor 60 angeordnet ist, welcher von der Haltevorrichtung 12 aufgenommenen ist. Der Ausschnitt der Verkleidung kann im Wesentlichen den Abmessungen einer sensoraktiven Oberfläche 62 des Sensors 60 entsprechen.

Im dargestellten Ausführungsbeispiel sind die Rückstellanordnungen 51 mit dem Fahrzeugbauteil 2 verbunden. Das Fahrzeugbauteil 2 entspricht im dargestellten Ausführungsbeispiel einem als Kunststoffbauteil ausgeführt Montageträger, welcher in Fahrzeuglängsrichtung x hinter der erfindungsgemäßen Sensoranordnung 10 angeordnet und an vorderen Anschraubpunkten mit der Fahrzeugkarosserie verschraubt ist. Hierbei wirkt die Kollisionskraft F nicht auf das Fahrzeugbauteil 2, sondern lediglich auf die Verkleidung, die Haltevorrichtung 12 und die Verbindungsanordnung 20.

Wie aus Fig. 1 bis 4 weiter ersichtlich ist, weisen die dargestellten Hebelanordnungen 30, 40 jeweils mindestens einen Schwenkarm 32, 42 und mindestens einen Haltearm 34, 44 auf.

Wie aus Fig. 1 weiter ersichtlich ist, weisen die Hebelanordnungen 30, 40 im dargestellten Ausführungsbeispiel der Verbindungsanordnung 20 an beiden Fahrzeugseiten jeweils zwei Schwenkarme 32, 42 auf. Die beiden Schwenkarme 32, 42 sind untereinander angeordnet und verlaufen parallel zueinander. Das bedeutet, dass in positive Fahrzeuglängsrichtung x gesehen an der linken Fahrzeugseite zwei erste Schwenkarme 32 untereinander angeordnet sind, und an der rechten Fahrzeugseite zwei zweite Schwenkarme 42 untereinander angeordnet sind. In einem alternativen nicht dargestellten Ausführungsbeispiel der erfindungsgemäßen Sensoranordnung 10 können die Hebelanordnungen 30, 40 an den beiden Fahrzeugseiten jeweils nur einen Schwenkarm 32, 42 oder mehr als zwei Schwenkarme 32, 42 aufweisen.

Wie aus Fig. 1 bis 4 weiter ersichtlich ist, sind die Schwenkarme 32, 42 jeweils mit einem ersten Endbereich 32.1, 42.1 mit dem korrespondierenden Endbereich 13, 14 der Haltevorrichtung 12 verbunden. Mit einem zweiten Endbereich 32.2, 42.2 sind die Schwenkarme 32, 42 mit der korrespondierenden Rückstellanordnung 51 gekoppelt.

Wie aus Fig. 1 weiter ersichtlich ist, weisen die Hebelanordnungen 30, 40 im dargestellten Ausführungsbeispiel der Verbindungsanordnung 20 an beiden Fahrzeugseiten jeweils zwei Haltearme 34, 44 auf. Jeder Haltearm 34, 44 ist einem Schwenkarm 32, 42 zugeordnet. Zudem sind die Haltearme 34, 44 einer Hebelanordnung 30, 40 untereinander angeordnet und verlaufen parallel zueinander. Das bedeutet, dass in positive Fahrzeuglängsrichtung x gesehen an der linken Fahrzeugseite zwei erste Haltearme 34 untereinander angeordnet sind, und an der rechten Fahrzeugseite zwei zweite Haltearme 44 untereinander angeordnet sind. Die Haltearme 34, 44 sind mit einem ersten Endbereich 34.1, 44.1 schwenkbar mit dem Fahrzeugbauteil 2 verbunden. Im dargestellten Ausführungsbeispiel sind die ersten Endbereiche 34.1, 44.1 der Haltearme 34, 44 jeweils über einen Befestigungsadapter 4, 6 mit dem Fahrzeugbauteil 2 verbunden. Die Haltearme 34, 44 sind mit einem zweiten Endbereich 34.2, 44.2 schwenkbar mit einem Haltebereich 32.3, 42.3 des korrespondierenden Schwenkarms 32, 42 verbunden, wobei der Haltebereich 32.3, 42.3 zwischen dem ersten Endbereich 32.1, 42.1 des Schwenkarms 32, 42 und dem zweiten Endbereich 32.2, 42.2 des Schwenkarms 32, 42 angeordnet ist. Die Verbindungsbereiche der ersten Endbereiche 34.1, 44.1 der Haltearme 34, 44 am Fahrzeugbauteil 2 bzw. am Befestigungsadapter 4, 6 , entsprechen im dargestellten Ausführungsbeispiel nicht den Verbindungsbereichen 51.4, 52.4 der Rückstellanordnungen 51. Dadurch kann eine größere Kraft von der Rückstellanordnung 51 auf den korrespondierenden Schwenkarm 32, 42 übertagen werden. In einem alternativen nicht dargestellten Ausführungsbeispiel der erfindungsgemäßen Sensoranordnung 10 können die Verbindungsbereiche 51.4, 52.4 der Rückstellanordnungen 51 an einem anderen Fahrzeugbauteil 2 angeordnet werden, als die Verbindungsbereiche der ersten Endbereiche 34.1, 44.1 der Haltearme 34, 44.

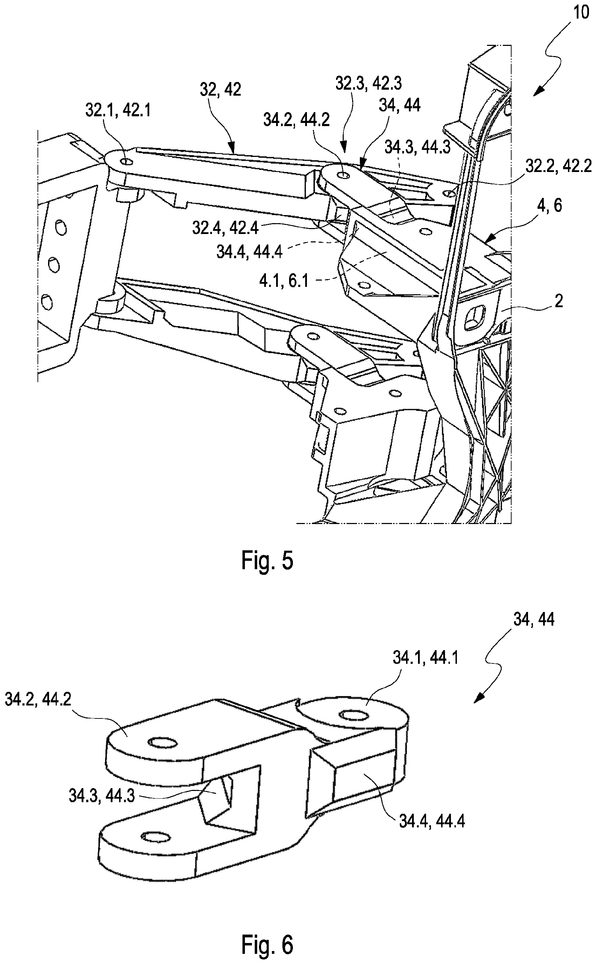

Wie insbesondere aus Fig. 5 bis 7 weiter ersichtlich ist, weisen die Schwenkarm 32, 42 an den Haltebereichen 32.3. 42.3 jeweils eine erste Führungsgeometrie 32.4, 42.4 auf, welche jeweils mit einer an den zweiten Endbereichen 34.2, 44.2 der Haltearme 34, 44 angeordneten zweiten Führungsgeometrie 34.3, 44.3 zentrierend zusammenwirkt. Zudem weisen die Haltearme 34, 44 im dargestellten Ausführungsbeispiel an den ersten Endbereichen 34.1, 44.1 jeweils eine dritte Führungsgeometrie 34.4, 44.4 auf, welche jeweils mit einer an dem mindestens einen Fahrzeugbauteil 2 angeordneten vierten Führungsgeometrie 4.1, 6.1 zentrierend zusammenwirkt. Im dargestellten Ausführungsbeispiel sind die vierten Führungsgeometrien 4.1, 6.1 jeweils an den korrespondierenden Befestigungsadaptern 4, 6 ausgebildet. Durch die zusammenwirkenden Führungsgeometrien 32.4, 34.2; 42.4, 44.2; 34.4, 4.1; 44.4, 6.1 kann der korrespondierende Schwenkarm 32, 42 bzw. der korrespondierende Haltearm 34, 44, insbesondere bei einer Rückstellbewegung, besser bzw. zuverlässiger in die Betriebsstellung überführt werden. Wie insbesondere aus Fig. 5 bis 7 weiter ersichtlich ist, ist eine der beiden jeweils zusammenwirkenden Führungsgeometrien 32.4, 34.2; 42.4, 44.2; 34.4, 4.1; 44.4, 6.1 jeweils als Negativform und eine der beiden jeweils zusammenwirkenden Führungsgeometrien 32.4, 34.2; 42.4, 44.2; 34.4, 4.1; 44.4, 6.1 als Positivform mit einem trapezförmigen Querschnitt ausgeführt. Das bedeutet, dass die an den Schwenkarmen 32, 42 ausgebildeten ersten Führungsgeometrien 32.4, 42.4 jeweils als Positivformen mit trapezförmigen Querschnitt ausgebildet sind. Die an den Haltearmen 34, 44 ausgebildeten zweiten Führungsgeometrien 34.4, 44.4 sind jeweils als Negativformen mit trapezförmigen Querschnitt ausgebildet. Analog sind die an den Haltearmen 34, 44 ausgebildeten dritten Führungsgeometrien 34.4, 44.4 jeweils als Positivformen mit trapezförmigen Querschnitt ausgebildet, und die an den Befestigungsadaptern 4, 6 ausgebildeten vierten Führungsgeometrien 4.1, 6.1 sind jeweils als Negativformen mit trapezförmigen Querschnitt ausgebildet. Bei alternativen nicht dargestellten Ausführungsbeispiele weisen Führungsgeometrien 32.4, 34.2; 42.4, 44.2; 34.4, 4.1; 44.4, 6.1 jeweils einen halbrunden oder dreieckigen oder elliptischen Querschnitt auf.

Wie aus Fig. 1 weiter ersichtlich ist, sind die Schwenkarme 32, 42 einer Hebelanordnung 30, 40 im dargestellten Ausführungsbeispiel der Hebelanordnungen 30, 40 jeweils über Verbindungsstege 43.1, 43.2, 43.3 miteinander verbunden. Hierbei ist ein erster Verbindungssteg 43.1 mit Rückstellelementen 51.2 der korrespondierenden Rückstellanordnung 51 verbunden. Der erste Verbindungssteg 43.1 verbindet zudem die zweiten Endbereiche 32.2, 42.2 der korrespondierenden Schwenkarme 32, 42 miteinander. Ein zweiter Verbindungssteg 43.2 verbindet die Haltebereiche 32.3, 42.3 der korrespondierenden Schwenkarme 32, 42 miteinander. Hierbei können die korrespondierenden Haltearme 34, 44 über ein Verbindungelement mit dem korrespondierenden Haltebereich 32.3, 42.3 und dem zweiten Verbindungssteg 43.2 verbunden werden. Ein dritter Verbindungssteg 43.3 bildet den korrespondierenden Endbereich 13, 14 der Halteanordnung 12 aus. Die ersten Endbereiche 32.1, 42.1 der Schwenkarme 32, 42 sind drehbar am korrespondierenden Verbindungssteg 43.3 gelagert. Die Verbindungsstege 43.1, 43.2, 43.3 verlaufen in Fahrzeughochrichtung z. Zudem verlaufen die Verbindungsstege parallel zu den Drehachsen oder Schwenkachsen der korrespondierenden Schwenkarme 32, 42. Durch die erfindungsgemäße Sensoranordnung 10 bewegt sich die Haltevorrichtung 12 in die resultierende Wirkungsrichtung WR der Kollisionskraft F gegen die Rückstellkraft der Rückstellanordnungen 51 in die Schutzstellung. Nach der Kollision bewegt sich die Haltevorrichtung 12 durch die Rückstellkraft wieder zurück in die Betriebsstellung.

Wie insbesondere aus Fig. 1 weiter ersichtlich ist, weisen die Rückstellanordnungen 51 im dargestellten Ausführungsbeispiel jeweils drei Federelemente auf, welche in einer zylinderförmigen Aufnahme 51.2 angeordnet sind. In einem alternativen nicht dargestellten Ausführungsbeispiel der Rückstellanordnungen 51 können diese mehr oder weniger als drei Federelemente aufweisen. Durch die Federelemente kann ein Längenausgleich geschaffen werden, welcher bei einer Schwenkung der korrespondierenden Haltearme 34, 44 oder bei einer Schwenkung der Schwenkarme 32, 42 erforderlich sein kann.

In einem alternativen nicht dargestellten Ausführungsbeispiel der Rückstellanordnungen 51 können die Rückstellanordnungen jeweils mindestens einen Antrieb und mindestens ein Zugelement aufweisen, welches mit dem korrespondierenden Schwenkarm 32, 42 gekoppelt ist. Hierbei erzeugt der mindestens eine Antrieb die Rückstellkraft und überträgt diese auf das mindestens eine Zugelement. Das Zugelement kann beispielsweise als Zugstange, Zugseil, Teleskopauszug oder als anderes geeignetes Element oder als andere geeignete Anordnung ausgeführt werden. Der Antrieb kann ein elektrisches Stellelement oder ein pneumatisches Stellelement oder ein hydraulisches Stellelement aufweisen. Durch das Stellelement kann zudem eine Position der Halteanordnung 12 und dadurch eine Position des Sensors 60 bzw. der sensoraktiven Oberfläche 62 eingestellt werden. Dadurch kann der Sensor 60 eine Position aufweisen, welche zur Ermittlung von Sensordaten bevorzugt wird. Die Rückstellanordnungen 51 können jeweils einen Überlastungsschutz mit einer Trennanordnung umfassen. Die Trennanordnung trennt den Schwenkarm 32, 42 vom korrespondierenden Zugelement. Hierbei ist der Schwenkarm 32, 42 bevorzugt über eine reversible Verbindung, beispielsweise über eine Clipsverbindung mit dem korrespondierenden Zugelement verbunden. Ein Stellmotor kann den Schwenkarm 32, 42 und das korrespondierende Zugelement wieder zusammenführen.

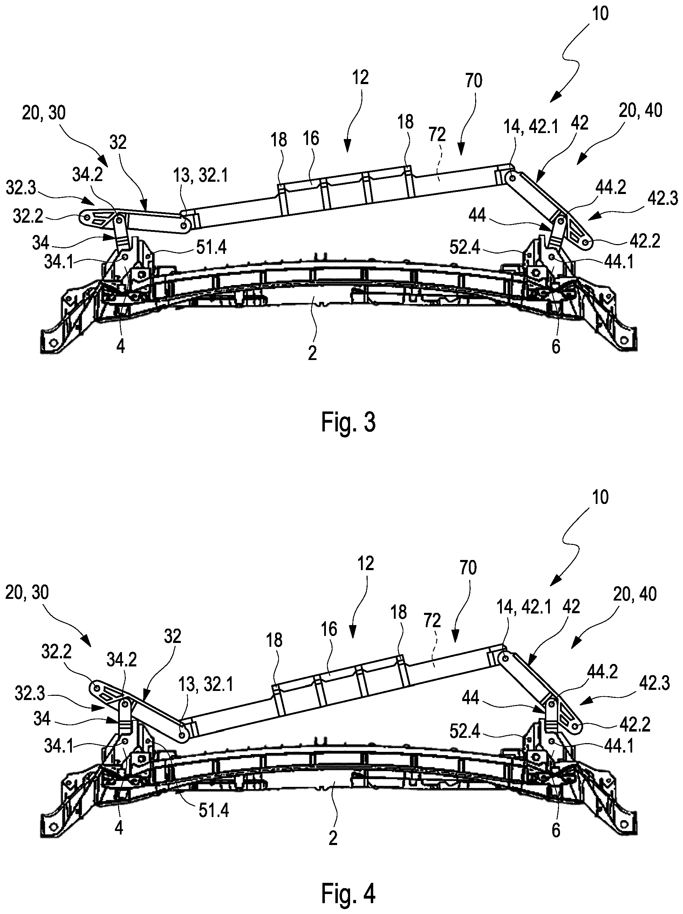

Wie aus Fig. 3 und 4 weiter ersichtlich ist, ist die mindestens eine Schutzstellung der Halteanordnung 12 nicht eindeutig definiert. Die Schutzstellung der Halteanordnung 12 ist von verschiedenen Faktoren abhängig, wie beispielsweise der Einschlagrichtung des Kollisionsgegners, dem Auftreffwinkel des Kollisionsgegners, der Stärke und der Wirkungsrichtung WR der Kollisionskraft F und von der daraus resultierenden Beschleunigung der Halteanordnung 12. Zudem kann die Aufprallfläche des Kollisionsgegners an der Verkleidung und die Reibung zwischen den Haltearmen 34, 44 und den Schwenkarmen 32, 42 zur Bewegung der Halteanordnung 12 beitragen.

Um die in Fig. 3 dargestellte Schutzstellung zu erreichen, werden die Haltearme 34 der der Kollisionskraft F zugewandten Hebelanordnung 30 aus der in Fig 1 und 2 dargestellten Betriebsstellung nach außen geschwenkt und der erste Endbereich 32.1 der korrespondierenden Schwenkarme 32 nach hinten in Richtung des Querträgers 2 geschoben. Dadurch schwenkt die Halteanordnung 12 ebenfalls nach hinten ab. Als Resultat wirkt auch eine Kraft auf die gegenüberliegende zweite Hebelanordnung 40. Wobei die korrespondierenden Haltearme 44 in Richtung Fahrzeugaußenseite schwenken und die korrespondierenden ersten Endbereiche 42.1 der Schwenkarme 42 nach hinten in Richtung Querträger 2 schwenken. Hierbei entsteht keine Relativbewegung zwischen der Halteanordnung 12 und dem Stoßfängerüberzug, welcher von dem Kollisionsgegner in Richtung Querträger 2 bewegt wird. Die Halteanordnung 12 bewegt sich entsprechend der Verformung des Stoßfängerüberzugs mit und bewegt sich mit dem Aufprallwinkel des Kollisionsgegners in die korrespondierende Schutzstellung.

Um die in Fig. 4 dargestellte Schutzstellung zu erreichen, wird nur die Hebelanordnung 30, welche der wirkenden Kollisionskraft F zugewandt ist betätigt. Die Haltearme 34 werden in der dargestellten Kollisionssituation nicht bewegt. Die ersten Endbereiche 32.1 der korrespondierenden Schwenkarme 32 werden aus der in Fig 1 und 2 dargestellten Betriebsstellung nach hinten in Richtung Querträger 2 geschwenkt. Der korrespondierende Endbereich 13 der Halteanordnung 12 schwenkt dadurch ebenfalls nach hinten ab. Hierbei entsteht eine Relativbewegung zwischen der Halteanordnung 12 und dem Stoßfängerüberzug.

Wie aus Fig 1 weiter ersichtlich ist, nimmt die Haltevorrichtung 12 im dargestellten Ausführungsbeispiel einen steuerbaren Kühllufteinlass 70 auf. Der Kühllufteinlass 70 weist Lamellen 72 auf, welche in einer offenen Stellung eine Einlassöffnung zumindest teilweise freigeben und die Einlassöffnung in einer geschlossenen Stellung vollständig verschließen.

Wie aus Fig 1 weiter ersichtlich ist, umfasst die Haltevorrichtung 12 einen Rahmen 16, welcher den Sensor 60 zumindest teilweise umschließt. Dieser Rahmen 16 kann wirkende Kollisionskräfte F von dem Sensor 60 wegleiten. Zusätzlich kann der Sensor 60 beweglich in dem Rahmen 16 gelagert werden. Die Ausrichtung des Sensors 60 kann beispielsweise durch einen Antrieb feiner eingestellt werden. Der Antrieb kann ein elektrisches, pneumatisches oder hydraulisches Stellelement umfassen wodurch der Sensor 60 um mehrere Achsen gedreht werden kann.

Wie aus Fig 1 weiter ersichtlich ist, umfasst die Haltevorrichtung 12 im dargestellten Ausführungsbeispiel mehrere Verstärkungsrippen 18. Die Verstärkungsrippen 18 können deckungsgleich zu Verstärkungsrippen des Stoßfängerüberzugs oder eines Stoßfängerquerträgers angeordnet werden.

### BEZUGSZEICHENLISTE

- 2: Fahrzeugbauteil
- 4, 6: Befestigungsadapter
- 4.1, 6.1: vierte Führungsgeometrie (Negativform)
- 10: Sensoranordnung
- 12: Haltevorrichtung
- 13: erster Endbereich
- 14: zweiter Endbereich
- 16: Rahmen
- 18: Verstärkungsrippe
- 20: Verbindungsanordnung
- 30: erste Hebelanordnung
- 40: zweite Hebelanordnung
- 32,42: Schwenkarm
- 32.1, 42.1: erster Endbereich (an Haltevorrichtung)
- 32.2, 42.2: zweiter Endbereich (an Rückstellanordnung)
- 32.3, 42.3: Haltebereich (zwischen den Endbereichen)
- 32.4, 42.4: erste Führungsgeometrie (Positivform)
- 43.1, 43.2, 43.3: Verbindungssteg
- 34, 44: Haltearm
- 34.1, 44.1: erster Endbereich (Fahrzeugbauteil)
- 34.2, 44.2: zweiter Endbereich (Schwenkarm)
- 34.3, 44.3: zweite Führungsgeometrie (Negativform)
- 34.4, 44.4: dritte Führungsgeometrie (Positivform)
- 51: Rückstellanordnung
- 51.2: Aufnahme
- 51.4, 52.4: Befestigungsbereich
- 60: Sensor
- 62: Sensoraktive Oberfläche
- 70: steuerbarer Kühllufteinlass
- 72: Lamelle
- x: Fahrzeuglängsrichtung
- y: Fahrzeugquerrichtung
- z: Fahrzeughochrichtung
- F: Kollisionskraft
- FX: erster Kraftanteil in Fahrzeuglängsrichtung
- FY: zweiter Kraftanteil in Fahrzeugquerrichtung
- WR: Wirkungsrichtung der Kollisionskraft
- R1: erste Raumrichtung
- R2: zweite Raumrichtung
- R3: dritte Raumrichtung

## Patentansprüche

1. Sensoranordnung (10) an einem Fahrzeug, mit einer Verbindungsanordnung (20), welche eine Haltevorrichtung (12) beweglich zwischen einer Betriebsstellung und mindestens einer Schutzstellung mit mindestens einem Fahrzeugbauteil (2) verbindet, wobei die Haltevorrichtung (12) einen Sensor (60) aufnimmt, wobei eine von einem Kollisionsgegner verursachte Kollisionskraft (F) einen in eine erste Raumrichtung (R1) wirkenden ersten Kraftanteil (FX) umfasst, welcher die Haltevorrichtung (12) anteilig in Richtung der korrespondierenden ersten Raumrichtung (R1) in die mindestens eine Schutzstellung bewegt, wobei die erste Raumrichtung (R1) einer Fahrzeuglängsrichtung (x) entspricht, wobei die Verbindungsanordnung (20) mindestens eine Hebelanordnung (30, 40) aufweist, welche zusätzlich mindestens einen in eine weitere Raumrichtung (R2, R3, y, z) wirkenden Kraftanteil (FY) der Kollisionskraft (F) in eine anteilige Bewegung der Haltevorrichtung (12) in die korrespondierende Raumrichtung (R2, R3, y, z) übersetzt, wobei die mindestens eine Hebelanordnung (30, 40) die Haltevorrichtung (12) in eine resultierende Wirkungsrichtung (WR) der Kollisionskraft (F) in die mindestens eine Schutzstellung überführt,
**dadurch gekennzeichnet, dass**
eine Rückstellkraft von mindestens einer Rückstellanordnung (51) die Haltevorrichtung (12) aus der mindestens einen Schutzstellung in die Betriebsstellung überführt, wobei die Hebelanordnungen (30, 40) jeweils mindestens einen Schwenkarm (32, 42) und mindestens einen Haltearm (34, 44) aufweisen, wobei der mindestens eine Schwenkarm (32, 42) mit einem ersten Endbereich (32.1, 42.1) mit dem korrespondierenden Endbereich (13, 14) der Haltevorrichtung (12) und mit einem zweiten Endbereich (32.2, 42.2) mit der korrespondierenden Rückstellanordnung (51) gekoppelt ist, wobei der mindestens eine Haltearm (34, 44) mit einem ersten Endbereich (34.1, 44.1) schwenkbar mit dem mindestens einen Fahrzeugbauteil (2) verbunden ist und mit einem zweiten Endbereich (34.2, 44.2) schwenkbar mit einem Haltebereich (32.3, 42.3) des korrespondierenden Schwenkarms (32, 42) verbunden ist, wobei der Haltebereich (32.3, 42.3) zwischen dem ersten Endbereich (32.1, 42.1) des Schwenkarms (32, 42) und dem zweiten Endbereich (32.2, 42.2) des Schwenkarms (32, 42) angeordnet ist.

2. Sensoranordnung (10) nach Anspruch 1,
**dadurch gekennzeichnet, dass**
eine zweite Raumrichtung (R2) einer Fahrzeugquerrichtung (y) und eine dritte Raumrichtung (R3) einer Fahrzeughochrichtung (z) entspricht, wobei die mindestens eine Hebelanordnung (30, 40) einen in Fahrzeugquerrichtung (y) wirkenden Kraftanteil (FY) der Kollisionskraft (F) in eine anteilige Bewegung der Haltevorrichtung (12) in Fahrzeugquerrichtung (y) übersetzt und/oder einen in Fahrzeughochrichtung (z) wirkenden Kraftanteil (FZ) der Kollisionskraft (F) in eine anteilige Bewegung der Haltevorrichtung (12) in Fahrzeughochrichtung (z) übersetzt.

3. Sensoranordnung (10) nach Anspruch 1 oder 2,
**dadurch gekennzeichnet, dass**
eine erste Hebelanordnung (30) mit einem ersten Endbereich (13) der Haltevorrichtung (12) und mit einer ersten Rückstellanordnung (51) gekoppelt ist, und eine zweite Hebelanordnung (40) mit einem zweiten Endbereich (14) der Haltevorrichtung (12) und mit einer zweiten Rückstellanordnung gekoppelt ist.

4. Sensoranordnung (10) nach einem der Ansprüche 1 bis 3,
**dadurch gekennzeichnet, dass**
der mindestens eine Schwenkarm (32, 42) am Haltebereich (32.3. 42.3) eine erste Führungsgeometrie (32.4, 42.4) aufweist, welche mit einer am zweiten Endbereich (34.2, 44.2) des Haltearms (34, 44) angeordneten zweiten Führungsgeometrie (34.3, 44.3) zentrierend zusammenwirkt.

5. Sensoranordnung (10) nach einem der Ansprüche 1 bis 4,
**dadurch gekennzeichnet, dass**
der mindestens eine Haltearm (34, 44) am ersten Endbereich (34.1, 44.1) eine dritte Führungsgeometrie (34.4, 44.4) aufweist, welche mit einer an dem mindestens einen Fahrzeugbauteil (2) angeordneten vierten Führungsgeometrie (4.1, 6.1) zentrierend zusammenwirkt.

6. Sensoranordnung (10) nach Anspruch 4 oder 5,
**dadurch gekennzeichnet, dass**
eine der beiden jeweils zusammenwirkenden Führungsgeometrien (32.4, 34.2; 42.4, 44.2; 34.4, 4.1; 44.4, 6.1) jeweils als Negativform und eine der beiden jeweils zusammenwirkenden Führungsgeometrien (32.4, 34.2; 42.4, 44.2; 34.4, 4.1; 44.4, 6.1) als Positivform ausgeführt ist.

7. Sensoranordnung (10) nach Anspruch 6,
**dadurch gekennzeichnet, dass**
die Führungsgeometrien (32.4, 34.2; 42.4, 44.2; 34.4, 4.1; 44.4, 6.1) jeweils einen trapezförmigen oder halbrunden oder dreieckigen oder elliptischen Querschnitt aufweisen.

8. Sensoranordnung (10) nach einem der Ansprüche 1 bis 7,
**dadurch gekennzeichnet, dass**
die Rückstellanordnungen (51) jeweils mit dem mindestens einen Fahrzeugbauteil (2) gekoppelt sind.

9. Sensoranordnung (10) nach einem der Ansprüche 1 bis 8,
**dadurch gekennzeichnet, dass**
die Rückstellanordnungen (51) jeweils mindestens ein Federelement aufweisen.

10. Sensoranordnung (10) nach einem der Ansprüche 1 bis 9,
**dadurch gekennzeichnet, dass**
die Rückstellanordnungen (51) jeweils mindestens einen Antrieb und mindestens ein Zugelement aufweisen, welches mit dem mindestens einen Schwenkarm (32, 42) gekoppelt ist, wobei der mindestens eine Antrieb die Rückstellkraft erzeugt und auf das mindestens eine Zugelement überträgt.

11. Sensoranordnung (10) nach Anspruch 10,
**dadurch gekennzeichnet, dass**
die Rückstellanordnungen (51) jeweils einen Überlastungsschutz mit einer Trennanordnung umfassen, welche den mindestens einen Schwenkarm (32, 42) von dem mindestens einen Zugelement trennt.

12. Sensoranordnung (10) nach einem der Ansprüche 1 bis 11,
**dadurch gekennzeichnet, dass**
die Haltevorrichtung (12) einen Rahmen (16) umfasst, welcher den Sensor (60) zumindest teilweise umschließt.

13. Sensoranordnung (10) nach einem der Ansprüche 1 bis 12,
**dadurch gekennzeichnet, dass**
die Haltevorrichtung (12) mindestens eine Verstärkungsrippe (18) umfasst.

## Claims

1. Sensor arrangement (10) on a vehicle, with a connection arrangement (20) which connects a holding device (12) to at least one vehicle component (2) so as to be movable between an operating position and at least one protection position, wherein the holding device (12) receives a sensor (60), wherein one of a collision force (F), caused by a collision counterpart, comprises a first force component (FX) which acts in a first spatial direction (R1) and moves the holding device (12) proportionately in the direction of the corresponding first spatial direction (R1) into the at least one protection position, wherein the first spatial direction (R1) corresponds to a vehicle longitudinal direction (x), wherein the connection arrangement (20) has at least one lever arrangement (30, 40) which additionally translates at least one force component (FY) of the collision force (F), acting in an additional spatial direction (R2, R3, y, z), into a proportionate movement of the holding device (12) in the corresponding spatial direction (R2, R3, y, z), wherein the at least one lever arrangement (30, 40) transfers the holding device (12) into the at least one protection position in a direction of action (WR) resulting from the collision force (F),
**characterised in that**
a restoring force from at least one restoring arrangement (51) transfers the holding device (12) from the at least one protection position into the operating position, wherein the lever arrangements (30, 40) each have at least one pivot arm (32, 42) and at least one holding arm (34, 44), wherein the at least one pivot arm (32, 42) is coupled by a first end region (32.1, 42.1) to the corresponding end region (13, 14) of the holding device (12) and by a second end region (32.2, 42.2) to the corresponding restoring arrangement (51), wherein the at least one holding arm (34, 44) is pivotably connected by a first end region (34.1, 44.1) to the at least one vehicle component (2) and is pivotably connected by a second end region (34.2, 44.2) to a holding region (32.3, 42.3) of the corresponding pivot arm (32, 42), wherein the holding region (32.3, 42.3) is arranged between the first end region (32.1, 42.1) of the pivot arm (32, 42) and the second end region (32.2, 42.2) of the pivot arm (32, 42).

2. Sensor arrangement (10) according to claim 1,
**characterised in that**
a second spatial direction (R2) corresponds to a vehicle transverse direction (y) and a third spatial direction (R3) corresponds to a vehicle vertical direction (z), wherein the at least one lever arrangement (30, 40) translates a force component (FY) of the collision force (F), acting in the vehicle transverse direction (y), into a proportionate movement of the holding device (12) in the vehicle transverse direction (y) and/or translates a force component (FZ) of the collision force (F), acting in the vehicle vertical direction (z), into a proportionate movement of the holding device (12) in the vehicle vertical direction (z).

3. Sensor arrangement (10) according to claim 1 or 2,
**characterised in that**
a first lever arrangement (30) is coupled to a first end region (13) of the holding device (12) and to a first restoring arrangement (51), and a second lever arrangement (40) is coupled to a second end region (14) of the holding device (12) and to a second restoring arrangement.

4. Sensor arrangement (10) according to any one of claims 1 to 3,
**characterised in that**
the at least one pivot arm (32, 42) has on the holding region (32.3, 42.3) a first guide geometry (32.4, 42.4) which interacts in a centering manner with a second guide geometry (34.3, 44.3) arranged on the second end region (34.2, 44.2) of the holding arm (34, 44).

5. Sensor arrangement (10) according to any one of claims 1 to 4,
**characterised in that**
the at least one holding arm (34, 44) has on the first end region (34.1, 44.1) a third guide geometry (34.4, 44.4) which interacts in a centering manner with a fourth guide geometry (4.1, 6.1) arranged on the at least one vehicle component (2).

6. Sensor arrangement (10) according to claim 4 or 5,
**characterised in that**
one of the two interacting guide geometries (32.4, 34.2; 42.4, 44.2; 34.4, 4.1; 44.4, 6.1) is designed as a negative mold respectively and one of the two respectively interacting guide geometries (32.4, 34.2; 42.4, 44.2; 34.4, 4.1; 44.4, 6.1) is designed as a positive mold.

7. Sensor arrangement (10) according to claim 6,
**characterised in that**
the guide geometries (32.4, 34.2; 42.4, 44.2; 34.4, 4.1; 44.4, 6.1) each have a trapezoidal or semicircular or triangular or elliptical cross-section.

8. Sensor arrangement (10) according to any one of claims 1 to 7,
**characterised in that**
the restoring arrangements (51) are each coupled to the at least one vehicle component (2).

9. Sensor arrangement (10) according to any one of claims 1 to 8,
**characterised in that**
the restoring arrangements (51) each have at least one spring element.

10. Sensor arrangement (10) according to any one of claims 1 to 9,
**characterised in that**
the restoring arrangements (51) each have at least one drive and at least one traction element which is coupled to the at least one pivot arm (32, 42), wherein the at least one drive generates the restoring force and transmits it to the at least one traction element.

11. Sensor arrangement (10) according to claim 10,
**characterised in that**
the restoring arrangements (51) each comprise an overload protection with a separating arrangement which separates the at least one pivot arm (32, 42) from the at least one traction element.

12. Sensor arrangement (10) according to any one of claims 1 to 11,
**characterised in that**
the holding device (12) comprises a frame (16) which at least partially encloses the sensor(60).

13. Sensor arrangement (10) according to any one of claims 1 to 12, **characterised in that**
the holding device (12) comprises at least one reinforcing rib (18).

## Revendications

1. Agencement de capteur (10) sur un véhicule, avec un agencement de connexion (20) qui connecte un dispositif de retenue (12) à au moins un composant de véhicule (2) de manière mobile entre une position de fonctionnement et au moins une position de protection, dans lequel le dispositif de retenue (12) reçoit un capteur (60), dans lequel une force de collision (F) provoquée par un antagoniste de collision comprend une première composante de force (FX) agissant dans une première direction spatiale (R1), laquelle composante déplace le dispositif de retenue (12) proportionnellement dans la direction de la première direction spatiale (R1) correspondante dans la au moins une position de protection, dans lequel la première direction spatiale (R1) correspond à une direction longitudinale de véhicule (x), dans lequel l'agencement de connexion (20) présente au moins un agencement de levier (30, 40) qui transforme en outre au moins une composante de force (FY) de la force de collision (F) agissant dans une autre direction spatiale (R2, R3, y, z) en un mouvement proportionnel du dispositif de retenue (12) dans la direction spatiale correspondante (R2, R3, y, z), dans lequel le au moins un agencement de levier (30, 40) fait passer le dispositif de retenue (12) dans une direction d'action résultante (WR) de la force de collision (F) dans la au moins une position de protection,
**caractérisé en ce que**
une force de rappel d'au moins un agencement de rappel (51) fait passer le dispositif de retenue (12) de la au moins une position de protection à la position de fonctionnement, dans lequel les agencements de levier (30, 40) présentent respectivement au moins un bras pivotant (32, 42) et au moins un bras de retenue (34, 44), dans lequel le au moins un bras pivotant (32, 42) est couplé par une première zone d'extrémité (32.1, 42.1) à la zone d'extrémité correspondante (13, 14) du dispositif de retenue (12) et par une deuxième zone d'extrémité (32.2, 42. 2) à l'agencement de rappel correspondant (51), dans lequel le au moins un bras de retenue (34, 44) est connecté de manière pivotante par une première zone d'extrémité (34.1, 44.1) à l'au moins un composant de véhicule (2) et est connecté de manière pivotante par une deuxième zone d'extrémité (34.2, 44.2) à une zone de retenue (32.3, 42.3) du bras pivotant correspondant (32, 42), dans lequel la zone de retenue (32.3, 42.3) est disposée entre la première zone d'extrémité (32.1, 42.1) du bras pivotant (32, 42) et la deuxième zone d'extrémité (32.2, 42.2) du bras pivotant (32, 42).

2. Agencement de capteur (10) selon la revendication 1,
**caractérisé en ce que**
une deuxième direction spatiale (R2) correspond à une direction transversale de véhicule (y) et une troisième direction spatiale (R3) correspond à une direction verticale de véhicule (z), dans lequel le au moins un agencement de levier (30, 40) transforme une composante de force (FY) de la force de collision (F) agissant dans la direction transversale de véhicule (y) en un mouvement proportionnel du dispositif de retenue (12) dans la direction transversale de véhicule (y) et/ou transforme une composante de force (FZ) de la force de collision (F) agissant dans la direction verticale de véhicule (z) en un mouvement proportionnel du dispositif de retenue (12) dans la direction verticale de véhicule (z).

3. Agencement de capteur (10) selon la revendication 1 ou 2,
**caractérisé en ce que**
un premier agencement de levier (30) est couplé à une première zone d'extrémité (13) du dispositif de retenue (12) et à un premier agencement de rappel (51), et un deuxième agencement de levier (40) est couplé à une deuxième zone d'extrémité (14) du dispositif de retenue (12) et à un agencement de rappel.

4. Agencement de capteur (10) selon l'une quelconque des revendications 1 à 3,
**caractérisé en ce que**
le au moins un bras pivotant (32, 42) présente sur la zone de retenue (32.3, 42.3) une première géométrie de guidage (32.4, 42.4) qui coopère de manière centrée avec une deuxième géométrie de guidage (34.3, 44.3) disposée sur la deuxième zone d'extrémité (34.2, 44.2) du bras de retenue (34, 44).

5. Agencement de capteur (10) selon l'une quelconque des revendications 1 à 4,
**caractérisé en ce que**
le au moins un bras de retenue (34, 44) présente sur la première zone d'extrémité (34.1, 44.1) une troisième géométrie de guidage (34.4, 44.4) qui coopère de manière centrée avec une quatrième géométrie de guidage (4.1, 6.1) disposée sur le au moins un composant de véhicule (2).

6. Agencement de capteur (10) selon la revendication 4 ou 5,
**caractérisé en ce que**
une des deux géométries de guidage (32.4, 34.2 ; 42.4, 44.2 ; 34.4, 4.1 ; 44.4, 6.1) interagissant respectivement est réalisée respectivement en tant que forme négative et une des deux géométries de guidage (32.4, 34.2 ; 42.4, 44.2; 34.4, 4.1; 44.4, 6.1) interagissant respectivement est réalisée en tant que forme positive.

7. Agencement de capteur (10) selon la revendication 6,
**caractérisé en ce que**
les géométries de guidage (32.4, 34.2 ; 42.4, 44.2 ; 34.4, 4.1 ; 44.4, 6.1) présentent respectivement une section transversale trapézoïdale ou semi-circulaire ou triangulaire ou elliptique.

8. Agencement de capteur (10) selon l'une quelconque des revendications 1 à 7,
**caractérisé en ce que**
les agencements de rappel (51) sont respectivement couplés à l'au moins un composant de véhicule (2).

9. Agencement de capteur (10) selon l'une quelconque des revendications 1 à 8,
**caractérisé en ce que**
les agencements de rappel (51) présentent respectivement au moins un élément de ressort.

10. Agencement de capteur (10) selon l'une quelconque des revendications 1 à 9,
**caractérisé en ce que**
les agencements de rappel (51) présentent respectivement au moins un entraînement et au moins un élément de traction qui est couplé à l'au moins un bras pivotant (32, 42), dans lequel le au moins un entraînement génère la force de rappel et la transmet à l'au moins un élément de traction.

11. Agencement de capteur (10) selon la revendication 10,
**caractérisé en ce que**
les agencements de rappel (51) comprennent respectivement une protection contre les surcharges avec un agencement de séparation qui sépare le au moins un bras pivotant (32, 42) de l'au moins un élément de traction.

12. Agencement de capteur (10) selon l'une quelconque des revendications 1 à 11,
**caractérisé en ce que**
le dispositif de retenue (12) comprend un cadre (16) qui renferme au moins partiellement le capteur (60).

13. Agencement de capteur (10) selon l'une quelconque des revendications 1 à 12,
**caractérisé en ce que**
le dispositif de retenue (12) comprend au moins une nervure de renforcement (18).
